# EUROPÄISCHE PATENTSCHRIFT

(11) **EP 2 591 664 B1**
(45) Veröffentlichungstag und Bekanntmachung des Hinweises auf die Patenterteilung: **29.11.2017**
(21) Anmeldenummer: 12188266.6
(22) Anmeldetag: 12.10.2012
(51) Int. Cl.: A01F 12/44

(54) **Sieb für eine Reinigungseinrichtung eines Mähdreschers**
Sieve for a cleaning device of a combine harvester
Crible pour une installation de nettoyage d'une moissonneuse-batteuse

(30) Priorität: 09.11.2011 DE 102011085977
(43) Veröffentlichungstag der Anmeldung: 15.05.2013
(73) Patentinhaber: Deere & Company, Moline, IL 61265 (US)
(72) Erfinder: Bischoff, Lutz, 66989 Nünschweiler (DE)
(74) Vertreter: Holst, Sönke

(56) Entgegenhaltungen:
- EP-A1- 1 068 793
- DE-A1- 1 923 375
- US-A- 4 502 493
- US-A1- 2010 113 113

## Beschreibung

Die vorliegende Erfindung bezieht sich auf ein Sieb nach dem Oberbegriff des Anspruchs 1.

### Stand der Technik

Mähdrescher dienen in der Landwirtschaft zur Ernte von Pflanzen, die vom Feld aufgenommen, ausgedroschen und getrennt werden. Die beim Drusch und Trennen erhaltenen Fruchtstände werden anschließend in einer Reinigung von unerwünschten Erntegutresten befreit. Die Reinigung umfasst ein Gebläse, das sich hin- und her bewegende Siebe mit einem Luftstrom beaufschlagt, wobei leichtere Teilchen, wie Kaff, durch den Luftstrom fortgetragen werden und das Korn durch die Siebe hindurch fällt und in einen Korntank verbracht wird. In der Regel ist ein Obersieb oberhalb eines Untersiebs angebracht.

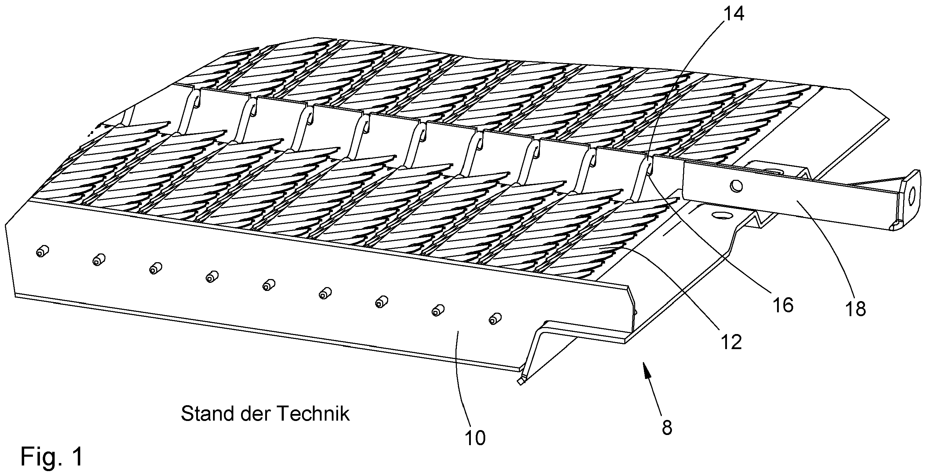

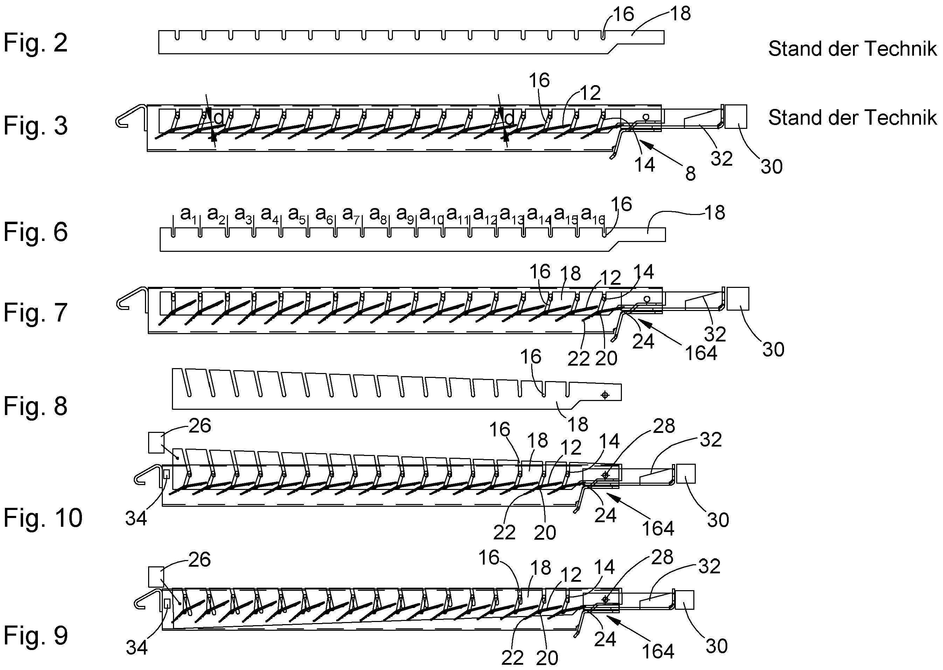

Die üblicherweise verwendeten, so genannten Lamellensiebe setzen sich, wie in der den Stand der Technik (vgl. beispielsweise EP 1 068 793 A1) repräsentierenden Figur 1 gezeigt ist, aus einem rechteckigen Rahmen 10 mit darin um ihre Längsachse schwenkbar angelenkten Lamellen 12 zusammen. Die Lamellen 12 sind drehfest mit Kurbelwellen 14 verbunden, die in einen jeweils Schlitz 16 in einer Verstellstange 18 eingreifen, welche in Längsrichtung des Siebes 8 durch einen manuellen oder fremdkraftbetätigten Antrieb beweglich ist, um den Winkel der Lamellen 12 und somit die Öffnungsgröße des Siebes 8, d.h. den Abstand zwischen dem rückwärtigen Ende einer Lamelle 12 zur Oberseite des rückwärtigen Teils der nachgelagerten Lamelle 12, verstellen und möglichst optimal an die jeweiligen Erntebedingungen, wie Korngröße, Seitenhangneigung und Durchsatz, anpassen zu können. Die Lamellen 12 sind an ihren rückwärtigen Enden wellenförmig eingeschnitten und in Querrichtung des Siebes 8 ebenfalls wellenförmig gewölbt. Wie in der Figur 2, die eine Seitenansicht einer konventionellen Verstellstange 18 zeigt, und in der Figur 3, die einen Längsschnitt durch ein konventionelles Sieb 8 zeigt, erkennbar ist, waren die Lamellen 12 eines Siebes 8 bisher äquidistant angeordnet, wie auch die Schlitze 16 in der Verstellstange 18. Da auch über das gesamte Sieb 8 identische Lamellen 12 verwendet wurden, sind die Öffnungsgrößen d des Siebes 8 über die Länge des Siebes konstant.

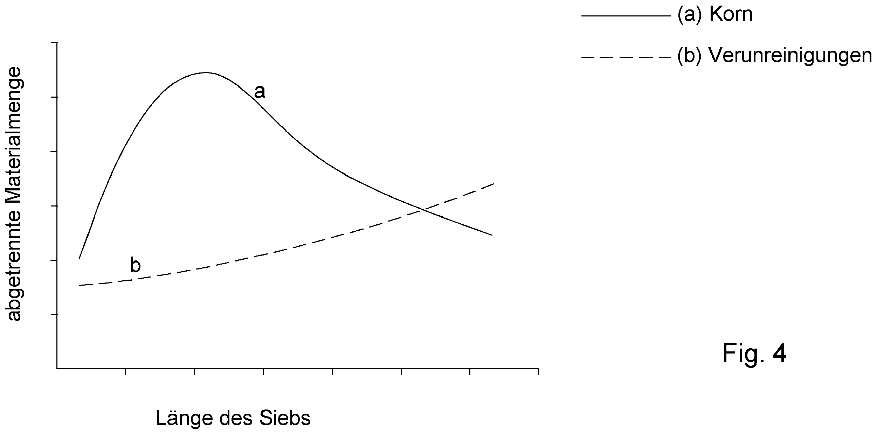

Die oberen Siebe werden im Betrieb an ihrem vorderen Ende bzw. in dessen unmittelbarer Nachbarschaft mit einem Gemisch aus Korn und unerwünschten Erntegutresten beladen, welche das Sieb über eine mit einem nach hinten gerichteten Luftstrom beaufschlagte Fallstufe erreichen, während die unteren Siebe vom oberen Sieb her beladen werden und demnach auch im vorderen Bereich mehr Korn und im hinteren Bereich mehr Verunreinigungen erhalten. Der Luftstrom führt bei beiden Sieben zu einer Trennung zwischen Korn und Verunreinigungen, sodass der größte Teil des Korns das Sieb weiter vorn erreicht als die durch den Luftstrom nach hinten getragenen, leichteren Verunreinigungen. Dabei ergeben sich typischerweise Abscheidekurven gemäß der Figur 4, in der die durchgezogene Kurve (a) die Abscheidung von Korn und die gestrichelte Kurve (b) die Abscheidung von Verunreinigungen über die Länge des Siebes 8 zeigen. Man erkennt, dass das meiste Korn in der vorderen Hälfte des Siebes abgeschieden wird, während die Menge des abgeschiedenen Korn nach hinten hin sukzessive hin anwächst, was durch die unterschiedlichen Auftreffpunkte des Korns und der Verunreinigungen auf dem Sieb nach dem Durchlaufen des Luftstroms bedingt ist. Im rückwärtigen Bereich des Siebs ist die Trennung des Korns von den Verunreinigungen schwieriger als im vorderen Bereich, denn während in der Fallstufe und im vorderen Siebbereich eine Trennung nach pneumatischen Kenngrößen der Komponenten erfolgt, kommt im hinteren Siebbereich der Trennung nach geometrischen Parametern eine höhere Bedeutung zu, sodass dort die Einstellung empfindlicher ist und die Sieböffnung dort relativ genau eingestellt und auf eine recht enge, an die Korngröße angepasste Größe gebracht werden muss, um ein optimales Ergebnis der Reinigung zu erreichen. Da die Sieböffnung über die Länge des Siebes konstant und relativ klein eingestellt ist, erfolgt dann im vorderen Bereich des Siebes keine hinreichende Abscheidung des Korns. Ein größerer Anteil des Korns bewegt sich demnach über das Sieb nach hinten und wird nicht ausgesiebt, sondern gelangt als Verlustkorn auf das Feld oder in den Überkehrförderer.

Um das Problem der Ansammlung übermäßiger Materialmengen im vorderen Bereich des Siebes zu vermeiden, schlägt die US 7 896 731 B2 vor, im vorderen Bereich eines Obersiebs einige Lamellen mit in seitlicher Richtung breiteren und in Längsrichtung tieferen Ausschnitten zu versehen als die übrigen Lamellen. Alle Lamellen des Siebes sind gleich beabstandet und haben dieselben Winkelstellungen. Dadurch sind die Sieböffnungen bei den besagten Lamellen etwas größer und dort tritt auch ein größerer Luftstrom von unten durch das Sieb hindurch, sodass an den besagten Lamellen einerseits die Abscheidung von Körnern verbessert und andererseits die Verunreinigungen in höherem Maße fortgeblasen werden sollen.

Die US 7 997 967 B2 beschreibt ein Sieb, bei dem Befestigungsabschnitte der Lamellen in einen von mehreren Schlitzen des Siebrahmens eingeführt werden können, um unterschiedliche Abstände der Lamellen zu realisieren und das Sieb an unterschiedliche Arten des Ernteguts anzupassen. Es ist durch die Wahl unterschiedlicher Schlitze auch möglich, unterschiedliche Abstände für unterschiedliche Abschnitte des Siebes einzustellen. Die Winkel der Lamellen sind über das gesamte Sieb jedoch gleich.

In der EP 1 849 351 A1 wird vorgeschlagen, das Obersieb und das Untersieb jeweils aus vorderen und hinteren Abschnitten zusammenzusetzen, deren Öffnungsgröße mittels eines gemeinsamen Antriebs veränderbar ist. Der Antrieb kann vom hinteren Abschnitt abgekoppelt werden, sodass dann nur der vordere Abschnitt verstellt wird und der hintere Abschnitt in der jeweiligen Stellung verbleibt. Diese Lösung bezieht sich vor allem auf den hinteren Teil des Obersiebes. Dieser wird oft weiter eingestellt, um noch unausgedroschene Ähren in die Überkehr abscheiden und dem Druschprozess zurückführen zu können

In der US 7 566 266 B1 sind etwa in der Mitte des Siebes Lamellen mit nur wenigen Fingern vorgesehen, die bogenförmig gekrümmt, länger und voneinander in Längs- und Querrichtung weiter als die Finger der anderen Lamellen beabstandet sind und dazu dienen sollen, Maisspindeln in eine Längsorientierung zu bringen, in der sie in Sieböffnungen eindringen und in diesen verbleiben können, um Hindernisse für über das Sieb laufende Stängel und Lieschblätter zu bilden.

Die als gattungsbildend angesehene SU 1 561 890 A1 zeigt ein Sieb mit verstellbaren Lamellen, die durch Kurbelwellen winkelgesteuert werden. Die Kurbelwellen der gleichartigen, gleich beabstandeten Lamellen wirken mit Aussparungen in einer Verstellstange zusammen, die mittels eines Verstellantriebs beweglich ist. Die Aussparungen sind über die Länge des Siebs unterschiedlich positioniert, sodass sich unterschiedliche Winkel der Lamellen über die Länge des Siebes ergeben. Eine ähnliche Anordnung, jedoch mit unterschiedlichen Winkeln zwischen den Lamellen und Kurbelwellen, findet sich in SU 1 496 699 A1.

### Aufgabe

Die Siebe nach US 7 896 731 B2, US 7 566 266 B1 und SU 1 496 699 A1 weisen den Nachteil auf, dass unterschiedliche Typen von Lamellen für ein einziges Sieb benötigt werden, was die Vorratshaltung und Bestellung von Ersatzteilen erschwert. Bei der Anordnung nach EP 1 849 351 A1 erweist sich die Verstellung des jeweils vom Antrieb abgekoppelten Teils des Siebes als umständlich und bei US 7 997 967 B2 entstehen relativ große Lücken zwischen benachbarten Lamellen. Bei der SU 1 561 890 A1 sind die Verhältnisse zwischen den Winkeln fest vorgegeben.

Es ist eine Aufgabe der vorliegenden Erfindung, ein Sieb für eine Reinigungseinrichtung eines Mähdreschers bereitzustellen, bei dem die Größen der Sieböffnungen über die Länge des Siebes unterschiedlich gewählt und insbesondere auch an die Abscheidekurve des Siebes (vgl. Figur 4) angepasst werden können, wobei die bezüglich des Standes der Technik erwähnten Nachteile jedoch vermieden oder vermindert werden sollen.

### Lösung

Diese Aufgabe wird durch die Lehre des Anspruchs 1 gelöst, wobei die Unteransprüche Merkmale vorteilhafter Ausführungsformen wiedergeben.

Ein Sieb für eine Reinigungseinrichtung eines Mähdreschers umfasst einen Rahmen, in dem mehrere gleichartige, sich quer zu einer Längs- und Schwingrichtung des Siebes erstreckende Lamellen in der Längsrichtung des Siebes hintereinander angeordnet sind. Die Lamellen sind um ihre sich quer zur Längsrichtung des Siebes erstreckenden Achsen in jeweils gleichen Abständen drehbar im Rahmen gelagert und mit Kurbelwellen versehen, die jeweils mit passenden Schlitzen in einer gegenüber dem Rahmen in Längsrichtung des Siebes positionsverstellbaren Verstellstange zusammenwirken. Durch Verschieben der Verstellstange in Längsrichtung des Siebes können die Winkel der Lamellen um ihre Achsen und somit die Abstände zwischen dem rückwärtigen Ende einer Lamelle zur Oberseite des rückwärtigen Teils der nachgelagerten Lamelle verstellt werden. Der Abstand zwischen den mit den Kurbelwellen zusammenwirkenden Bereichen zumindest zweier benachbarter Schlitze in der Verstellstange ist von den Abständen der Drehachsen der Lamellen unterschiedlich, sodass zumindest eine Lamelle einen anderen Winkel als eine andere Lamelle aufweist.

Auf diese Weise wird es ermöglicht, unterschiedliche Drehwinkel und somit Sieböffnungen über die Länge des Siebes zu erzielen, ohne unterschiedliche Arten von Lamellen zu verwenden. Durch die jeweils gleichen Abstände der Achsen, an denen die Lamellen drehbar am Rahmen befestigt sind, vermeidet man größere, unerwünschte Lücken zwischen benachbarten Lamellen, die in unterschiedliche Drehwinkel gestellt werden.

Vorzugsweise werden die Schlitze derart an der Verstellstange positioniert, dass die Lamellen in einem vorderen Bereich des Siebes steiler und somit mit ihren rückwärtigen Enden weiter voneinander beabstandet stehen und größere Sieböffnungen bilden als in einem rückwärtigen Bereich des Siebes. Dadurch erzielt man eine optimale Anpassung an die Abscheidekurve (a) der Figur 4, wobei auch beliebig feine Zwischenstufen der Winkel und Sieböffnungen über die Länge des Siebes vorgesehen werden können. Die Sieböffnung kann von vorn nach hinten beispielsweise linear absinken oder entsprechend der Kurve (a) der Figur 4 zunächst ansteigen und nach einem Maximum wieder absinken. Es können auch jeweils Bereiche des Siebes mit gleichen Sieböffnungen gebildet werden, denen andere Bereiche mit anderen, jedoch untereinander gleichen Sieböffnungen folgen.

Das Korn kann demnach unproblematisch im vorderen Bereich des Siebs durch die dort größeren Sieböffnungen fallen, während die Sieböffnungen im rückwärtigen Bereich des Siebs hinreichend klein gewählt werden können, um eine hohe Reinheit des Korns im Korntank zu erzielen. Durch die höhere Abscheidung des Korns im vorderen Bereich des Siebs wird auch die Belastung des rückwärtigen Bereichs des Siebs reduziert, was eine empfindlichere Einstellung des rückwärtigen Bereichs des Siebs zur Erzielung höherer Kornreinheit ermöglicht. Demnach wird die Kapazität des Siebs bei gleicher Siebqualität vergrößert.

Die Verstellstange ist zusätzlich mittels eines fremdkraft- und/oder manuell betätigten Positionierantriebs in vertikaler Richtung verstellbar angebracht, wobei sich die Positionen der jeweils mit den Kurbelwellen der Lamellen zusammenwirkenden Bereiche eines, einiger oder aller Schlitze bezüglich der Längsrichtung des Siebes ändern, wenn die Verstellstange in vertikaler Richtung verstellt wird. Insbesondere kann die Verstellstange derart geformt sein, dass in einer ersten Stellung der Verstellstange in vertikaler Richtung einige (d.h. mindestens zwei) oder alle Lamellen jeweils unterschiedliche Drehwinkel aufweisen und in einer zweiten Stellung der Verstellstange in vertikaler Richtung sämtliche (oder zumindest eine gegenüber der ersten Stellung größere Anzahl) Lamellen gleiche Drehwinkel haben. Die erste Stellung ermöglicht die bereits erwähnte Anpassung an die Abscheidekurve (a) der Figur 4, während die zweite Stellung über die Länge des Siebes gleiche Winkel der Lamellen gemäß der Figur 3 zur Folge hat, die sich bei manchen Erntegutarten als vorteilhaft erweist. Es sind auch Zwischenstellungen möglich. Damit ist das Verhältnis der Sieböffnung vorn/hinten einstellbar.

Diese und andere Aufgaben, Merkmale und Vorteile der vorliegenden Erfindung werden dem Fachmann nach dem Lesen der folgenden detaillierten Beschreibung und angesichts der Zeichnungen offensichtlich.

### Ausführungsbeispiel

- Fig. 1: ist eine perspektivische Ansicht eines Siebs für eine Reinigungseinrichtung eines Mähdreschers.
- Fig. 2: zeigt eine Verstellstange nach dem Stand der Technik.
- Fig. 3: zeigt einen Längsschnitt durch ein Sieb nach dem Stand der Technik.
- Fig. 4: zeigt ein Diagramm zur Abscheidung des Korns und der Verunreinigungen über die Länge eines Siebes nach dem Stand der Technik.
- Fig. 5: zeigt einen schematischen Längsschnitt durch einen Mähdrescher mit einer Reinigungseinrichtung, in der ein Sieb eingesetzt ist.
- Fig. 6: zeigt eine Verstellstange nach einem ersten Ausführungsbeispiel der Erfindung.
- Fig. 7: zeigt einen Längsschnitt durch ein Sieb, in dem die Verstellstange der Figur 6 eingebaut ist.
- Fig. 8: zeigt eine Verstellstange nach einem zweiten Ausführungsbeispiel der Erfindung.
- Fig. 9: zeigt einen Längsschnitt durch ein Sieb, in dem die Verstellstange der Figur 8 eingebaut ist und sich in einer ersten Stellung befindet.
- Fig. 10: zeigt einen Längsschnitt durch ein Sieb, in dem die Verstellstange der Figur 8 eingebaut ist und sich in einer zweiten Stellung befindet.

Bezüglich der Figuren 1 bis 4 wird auf die Diskussion in der Beschreibungseinleitung verwiesen, sodass sich hier weitere Erörterungen erübrigen.

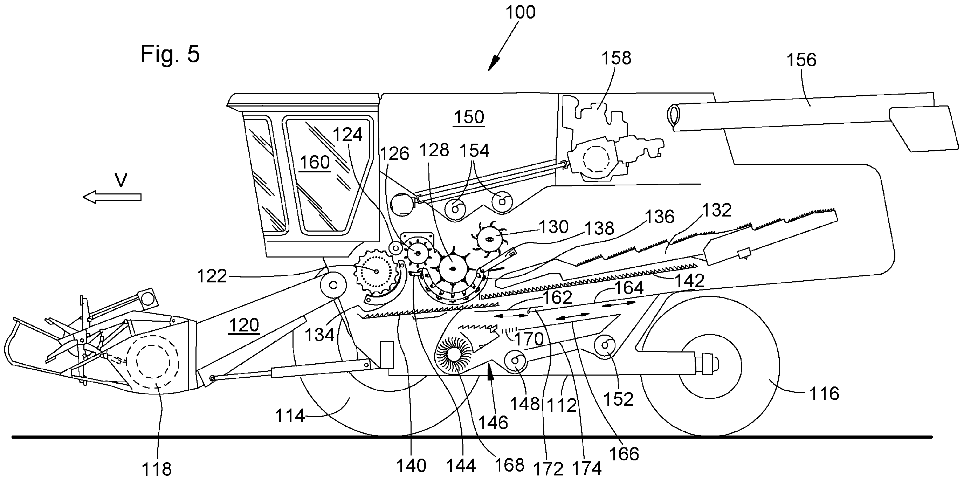

Die Figur 5 zeigt einen selbstfahrenden Mähdrescher 100 mit einem Fahrgestell 112, das sich über angetriebene vordere Räder 114 und lenkbare rückwärtige Räder 116 auf dem Boden abstützt und von diesen fortbewegt wird. Die Räder 114 werden mittels nicht gezeigter Antriebsmittel in Drehung versetzt, um den Mähdrescher 100 z. B. über ein abzuerntendes Feld zu bewegen. Im Folgenden beziehen sich Richtungsangaben, wie vorn und hinten, auf die Fahrtrichtung V des Mähdreschers 100 im Erntebetrieb.

An den vorderen Endbereich des Mähdreschers 100 ist eine Erntegutbergungsvorrichtung 118 in Form eines Schneidwerks abnehmbar angeschlossen, um beim Erntebetrieb Erntegut in Form von Getreide oder anderen, dreschbaren Halmfrüchten von dem Feld zu ernten und es nach oben und hinten durch einen Schrägförderer 120 einem Mehrtrommeldreschwerk zuzuführen, das - in Fahrtrichtung V hintereinander angeordnet - eine Dreschtrommel 122, eine Abstreiftrommel 124, eine oberschlächtig arbeitende Fördertrommel 126, einen Tangentialseparator 128 sowie eine Wendetrommel 130 umfasst. Stromab der Wendetrommel 130 befindet sich ein Strohschüttler 132. Die Dreschtrommel 122 ist in ihrem unteren und rückwärtigen Bereich von einem Dreschkorb 134 umgeben. Unterhalb der Fördertrommel 126 ist eine mit Öffnungen versehene oder geschlossene Abdeckung 144 angeordnet, während sich oberhalb der Fördertrommel 126 eine fest stehende Abdeckung und unterhalb des Tangentialseparators 128 ein Separierkorb 136 mit verstellbaren Fingerelementen befindet. Unterhalb der Wendetrommel 130 ist ein Fingerrechen 138 angeordnet.

Das durch den Dreschkorb 134, den Separierkorb und die Strohschüttler 132 hindurchtretende, Körner und Verunreinigungen enthaltende Gemisch gelangt über Förderböden 140, 142 in eine Reinigungseinrichtung 146. Durch die Reinigungseinrichtung 146 gereinigtes Getreide wird mittels einer Körnerschnecke 148 einem nicht gezeigten Elevator zugeführt, der es in einen Korntank 150 befördert. Eine Überkehrschnecke 152 gibt unausgedroschene Ährenteile durch einen weiteren nicht gezeigten Elevator zurück in den Dreschprozess. Das gereinigte Getreide aus dem Korntank 150 kann durch ein Entladesystem mit Querschnecken 154 und einem Entladeförderer 156 entladen werden. Die genannten Systeme werden mittels eines Verbrennungsmotors 158 angetrieben und von einem Bediener aus einer Fahrerkabine 160 heraus kontrolliert und gesteuert.

Die Reinigungseinrichtung 146 umfasst ein Gebläse 168, ein Vorsieb 162, ein oberes Sieb 164 und ein unteres Sieb 166, das unterhalb des oberen Siebs 164 positioniert ist. Die Siebe 162, 164, 166 werden im Betrieb durch geeignete Kurbel- oder Exzenterantriebe in eine gleich- oder entgegen gerichtete Schwingbewegung versetzt, in der sie sich in der Vorwärtsrichtung oszillierend hin- und her bewegen, wie in der Figur 5 durch Pfeile dargestellt. Die Siebe 162, 164 und 166 werden durch das Gebläse 168 von unten her mit Luftströmen beaufschlagt. Das Gemisch aus Korn und Verunreinigungen erreicht über die Förderböden 140, 142 zunächst das Vorsieb 162, das im vorderen Bereich mit Sieböffnungen versehen und im rückwärtigen Bereich verschlossen ist. Das durch das Vorsieb 162 fallende Korn kann durch einen dem unteren Sieb 166 vorgelagerten Rost 170 direkt zur Körnerschnecke 148 gelangen. Es wäre aber auch denkbar, den Rost 170 durch ein längeres unteres Sieb 166 zu ersetzen. Das übrige Gemisch gelangt über eine vom Gebläse 168 her luftbeströmte Fallstufe 172 auf das obere Sieb 164, wobei das Korn sich zum größten Teil im vorderen Bereich des Siebs 164 ansammelt und die Verunreinigungen durch den Luftstrom in der Fallstufe 172 nach hinten geblasen werden und sich zum größeren Teil im rückwärtigen Bereich des oberen Siebs 164 ansammeln, vgl. Figur 4 und die zugehörige Beschreibung. Durch das obere Sieb 164 fallendes Korn fällt auf das untere Sieb 166, auf dem sich eine ähnliche Verteilung des Korns und der Verunreinigungen wie auf dem oberen Sieb 166 ergibt. Vom unteren Sieb 166 ausgesiebtes Korn gelangt über einen Förderboden 174 zur Körnerschnecke 148 und am rückwärtigen Ende des unteren Siebs 166 fallendes Korn und Verunreinigungen werden durch die Überkehrschnecke 152 wieder dem Dreschprozess oder einem separaten Nachdrescher zugeführt, von dem sie wieder auf das Vorsieb 162 gelangen. Am rückwärtigen Ende des oberen Siebs abgegebenes Material wird durch rotierende Spreuverteiler ausgeworfen oder durch einen stromab des Strohschüttlers 132 angeordneten Strohhäcksler (nicht eingezeichnet) auf das Feld ausgetragen.

Der grundsätzliche mechanische Aufbau der Siebe 164, 166 entspricht dem Sieb 8 der Figur 1. Das untere Sieb 166 umfasst demnach eine Anzahl an identischen Lamellen 12, die am Rahmen 10 des Siebs 166 in jeweils gleichen Abständen drehbar angelenkt sind und durch Verstellelemente in Form von Kurbelwellen 14 mit Merkmalen in Form von Schlitzen 16 in einer einzigen Verstellstange 18 zusammenwirken. Die Lamellen 12 sind an ihren Drehachsen 20 abgewinkelt, umfassen somit einen unteren Bereich 22, der sich von der Drehachse 20 am Rahmen 10 schräg nach unten und vorn erstreckt und einen oberen Bereich 24, der sich (weniger steil als der untere Bereich 22) von der Drehachse 20 schräg nach oben und hinten erstreckt. Die oberen Bereiche 24 der Lamellen 12 sind in Querrichtung etwa sinusförmig gewölbt und an ihren rückwärtigen Enden mit wellenförmigen Einbuchtungen versehen, wie in der Figur 1 gezeigt ist. Es wäre möglich, dass eine oder mehrere Lamellen 12, insbesondere am rückwärtigen Ende des Siebes 166, anders als die übrigen Lamellen 12 geformt sind. So könnten diese Lamellen beispielsweise an ihren seitlichen Enden ausgeschnitten sein, damit beim Arbeiten am Hang Material nach unten hindurch fallen kann.

Durch einen manuell und/oder mit Fremdkraft betätigten Verstellantrieb 30 wird die Verstellstange 18 über eine Antriebsstange 32 in der Längs- und Schwingrichtung des Siebs 166 verstellt, um die Öffnungsgröße d des Siebs 166 auf einen optimalen Wert einzustellen, bei dem möglichst viel Korn aber wenig Verunreinigungen durch das Sieb 166 hindurchtreten und möglichst wenig Korn als Verlust verloren geht.

Bei einer ersten Ausführungsform des oberen Siebes 166, wie es in der Figur 7 gezeigt ist, sind in der in Figur 6 dargestellten, zugehörigen Verstellstange 18 die Abstände a1 bis a15 zwischen benachbarten Schlitzen 16 zwar unter sich zumindest etwa gleich, aber größer als bei der Verstellstange nach Figur 2 gewählt. Durch diese Positionierung der Schlitze 16 in der Verstellstange 18 erreicht man, dass die rückwärtigen Bereiche 24 der vorderen Lamellen 12 relativ steil stehen und die nach hinten folgenden Lamellen 12 jeweils und sukzessive etwas flacher angestellt sind. Die Sieböffnung d ist somit nicht, wie im Stand der Technik nach Figur 2, über die Länge des Siebes 166 konstant, sondern sinkt sukzessive nach hinten hin ab. Dadurch wird der Verteilung des Gemischs aus Korn und Verunreinigungen über die Länge des Siebes 166 und der Abscheidekurve der Figur 4 Rechnung getragen: Korn kann im vorderen Bereich des Siebes 166 problemlos nach unten passieren, im rückwärtigen Bereich können die Verunreinigungen jedoch nur schwer durchtreten.

Bei der zweiten Ausführungsform nach den Figuren 8 bis10 ist die Verstellstange 18 mit längeren, vertikalen Schlitzen 16 versehen, wobei die Schlitze 16 im rückwärtigen Bereich der Verstellstange 18 relativ genau vertikal stehen und die Schlitze 16 im vorderen Bereich leicht schräg nach vorn und oben hin geneigt sind. Ein manuell oder fremdkraftbetätigter Positionierantrieb 26 dient zur vertikalen Verstellung des vorderen Endes der Verstellstange 18. Letztere ist an ihrem rückwärtigen Ende über ein Drehlager 28 mit der Antriebsstange 32 gekoppelt, die wiederum durch den Verstellantrieb 30 in Vorwärtsrichtung bewegbar ist.

Die zweite Ausführungsform ermöglicht es, die Verstellstange 18 in die erste Position gemäß der Figur 9 zu verbringen, in der sie weitestmöglich nach unten abgesenkt ist und die Kurbelwellen 14 in der Nähe der oberen Enden der Schlitze 16 mit den Schlitzen 16 zusammenwirken. Da die Abstände a1 bis a15 der Schlitze 16 dort mit den Abständen a1 bis a15 der Schlitze gemäß Figur 6 identisch sind, entsprechen dann die Winkel der Lamellen 12 ihren Positionen bei der ersten Ausführungsform der Figur 7, wie in der Figur 9 erkennbar ist.

Außerdem kann die Verstellstange 18 durch den Positionierantrieb 26 in die zweite Position gemäß der Figur 10 verbracht werden, in der sie weitestmöglich nach oben angehoben ist und die Kurbelwellen 14 in der Nähe der unteren Enden der Schlitze 16 mit den Schlitzen 16 zusammenwirken. Da die Abstände a der Schlitze 16 dort mit den Abständen a der Schlitze gemäß Figur 2 identisch sind, entsprechen dann die Winkel der Lamellen 12 ihren Positionen gemäß dem Stand der Technik und sind auch identisch, wie in der Figur 10 erkennbar ist.

Der Positionierantrieb 26 ermöglicht auch eine (stufenlose oder stufige) Einstellung beliebiger Zwischenstellungen zwischen der ersten und zweiten Position. Auf diese Weise kann die Abhängigkeit der Lamellenwinkel und Sieböffnungen d von der jeweiligen Position der Lamelle 12 entlang des Siebes 166 auf einen der Erntegutart optimal angepassten Wert gestellt werden. Diese Verstellung kann manuell vor Ort oder fremdkraftbetätigt aus der Kabine 160 erfolgen, wobei im zweiten Fall eine manuelle Eingabe oder eine Automatik zum Einsatz kommen kann, die die Verstellung selbsttätig beispielsweise anhand der Erntegutart und/oder des durch einen geeigneten Sensor erfassten Erntegutdurchsatzes und/oder anhand der durch einen geeigneten Sensor erfassten Menge des Materials auf dem unteren Sieb 166 und/oder anhand der durch einen geeigneten Sensor erfassten Verlustkornrate und/oder anhand der durch einen geeigneten Sensor erfassten Menge und/oder Kornanteils der Überkehr vornehmen kann. Die Automatik steuert dann auch selbsttätig den Verstellantrieb 30 an. In der Kabine 160 kann dem Bediener eine Anzeige hinsichtlich der eingestellten Sieböffnungsgrößen gegeben werden, die beispielsweise die Sieböffnung im rückwärtigen Bereich und ein Verhältnis zwischen der Sieböffnung im vorderen Bereich zur Sieböffnung im hinteren Bereich wiedergegeben kann.

In der ersten Stellung nach Figur 9 ist der Verstellbereich des Verstelltriebs 30 aufgrund der bereits steiler stehenden vorderen Lamellen 12 kleiner als in der zweiten Stellung nach Figur 10, sodass der Bewegungsbereich des Verstellantriebs 30 durch einen geeigneten, vom Positionierantrieb 26 bewegten Anschlag 34 begrenzt werden kann, der in Abhängigkeit von der vertikalen Stellung der Verstellstange 18 positioniert wird. Alternativ könnte eine Steuerung des Positionierantriebs 26 und des Verstellantriebs 30 die aktuelle Stellung der Verstellstange 18 selbsttätig berücksichtigen, um eine übermäßige Öffnung von Lamellen 12 zu verhindern.

Es sei noch angemerkt, dass die Verstellstange 18 auch aus mehreren, starr untereinander verbundenen Abschnitten aufgebaut sein könnte. Es wäre auch denkbar, den Positionierantrieb 26 ebenfalls an die Rückseite des Siebes 166 zu legen und die Drehachse 28 an die Vorderseite des Siebes 166 zu setzen, wobei dann die Form der Schlitze 16 entsprechend anzupassen wäre, um die beschriebene Wirkungsweise beizubehalten, bzw. man dann den Verstelltrieb 30 bei einer Betätigung des Positionierantriebs 26 nachführen müsste, um die gewünschten Öffnungsgrößen zu erzielen. Auch könnte sich die Verstellstange18 unterhalb des Siebes 166 befinden. Schließlich kann auch das obere Sieb 164 gemäß einer der erfindungsgemäßen Ausführungsformen nach Figur 6 bis 10 ausgeführt werden.

## Patentansprüche

1. Sieb (166) für eine Reinigungseinrichtung (146) eines Mähdreschers (100), mit einem Rahmen (10), in dem mehrere gleichartige, sich quer zu einer Längs- und Schwingrichtung des Siebes (166) erstreckende Lamellen (12) in der Längsrichtung des Siebes (12) hintereinander angeordnet, um sich quer zur Längsrichtung des Siebes (166) erstreckende Drehachsen (20) in jeweils gleichen Abständen drehbar im Rahmen (10) gelagert und mit Kurbelwellen (14) versehen sind, die jeweils mit passenden Schlitzen (16) in einer gegenüber dem Rahmen (10) in Längsrichtung des Siebes (166) positionsverstellbaren Verstellstange (18) zusammenwirken, um durch Verschieben der Verstellstange (18) in Längsrichtung des Siebes (166) die Winkel der Lamellen (12) um ihre Drehachsen (20) und somit die Abstände (d) zwischen dem rückwärtigen Ende einer Lamelle (12) zur Oberseite des rückwärtigen Teils der nachgelagerten Lamelle (12) verstellen zu können, wobei der Abstand (a₁ bis a₁₆) zwischen den mit den Kurbelwellen (14) zusammenwirkenden Bereichen zumindest zweier benachbarter Schlitze (16) in der Verstellstange (18) von den Abständen der Drehachsen (20) der Lamellen (12) unterschiedlich ist, sodass zumindest eine Lamelle (12) einen anderen Winkel als eine andere Lamelle (12) aufweist, **dadurch gekennzeichnet, dass** die Verstellstange (18) mittels eines manuell oder mit Fremdkraft betätigten Positionierantriebs (26) in vertikaler Richtung verstellbar angebracht ist, und dass die Verstellstange (18) derart geformt ist, dass sich die Positionen der jeweils mit den Kurbelwellen (14) der Lamellen (12) zusammenwirkenden Bereiche eines Schlitzes (16) oder einiger oder aller Schlitze (16) in Längsrichtung des Siebes (166) ändert oder ändern, wenn die Verstellstange (18) in vertikaler Richtung verstellt wird.

2. Sieb (166) nach Anspruch 1, **dadurch gekennzeichnet, dass** die Position und Abstände der Schlitze (16) an der Verstellstange (18) derart gewählt sind, dass die Lamellen (12) in einem vorderen Bereich des Siebes (166) steiler und somit mit ihren rückwärtigen Enden weiter voneinander beabstandet stehen als in einem rückwärtigen Bereich des Siebes (166).

3. Sieb (166) nach Anspruch 2, **dadurch gekennzeichnet, dass** die Position und Abstände der Schlitze (16) an der Verstellstange (18) derart gewählt sind, dass die Winkel der Lamellen (12) über die Länge des Siebs (166) sukzessive flacher werden.

4. Sieb (166) nach Anspruch 3, **dadurch gekennzeichnet, dass** die Position und Abstände der Schlitze (16) an der Verstellstange (18) derart gewählt sind, dass die Winkel der Lamellen (12) über die Länge des Siebs (166) linear flacher werden.

5. Sieb (166) nach Anspruch 2, **dadurch gekennzeichnet, dass** die Position und Abstände der Schlitze (16) an der Verstellstange (18) derart gewählt sind, dass die Winkel der Lamellen (12) über die Länge des Siebs (166) zunächst ansteigen und nach einem bei etwa einem Drittel der Länge des Siebs (166) liegenden Maximum wieder kontinuierlich abnehmen.

6. Sieb (166) nach einem der Ansprüche 1 bis 5, **dadurch gekennzeichnet, dass** die Verstellstange (18) derart geformt ist, dass in einer ersten vertikalen Stellung der Verstellstange (18) einige oder alle Lamellen (12) jeweils unterschiedliche Winkel aufweisen und in einer zweiten vertikalen Stellung der Verstellstange (18) eine gegenüber der ersten Stellung größere Anzahl oder sämtliche Lamellen (12) gleiche Winkel haben.

7. Sieb (166) nach einem der Ansprüche 1 bis 6, **dadurch gekennzeichnet, dass** die Verstellstange (18) über ein Drehlager (28) mit einer Antriebsstange (32) gekoppelt ist, die wiederum durch einen Verstellantrieb (30) in Vorwärtsrichtung bewegbar ist, und dass sich der Positionierantrieb (26) am vom Drehlager (28) beabstandeten Ende der Verstellstange (18) befindet.

8. Mähdrescher (100) mit einer Reinigungseinrichtung (146) und einem Sieb (166) nach einem der vorhergehenden Ansprüche.

## Claims

1. Sieve (166) for a cleaning device (146) of a combine harvester (100), with a frame (10) in which a plurality of identical slats (12) extending transversely with respect to a longitudinal and oscillating direction of the sieve (166) are arranged one behind another in the longitudinal direction of the sieve (12), are mounted at equal distances in each case in the frame (10) so as to be rotatable about axes of rotation (20) extending transversely with respect to the longitudinal direction of the sieve (166) and are provided with crankshafts (14) which each interact with mating slots (16) in an adjustment rod (18), which is adjustable in position in relation to the frame (10) in the longitudinal direction of the sieve (166), in order, by displacement of the adjustment rod (18) in the longitudinal direction of the sieve (166), to be able to adjust the angles of the slats (12) about their axes of rotation (20) and therefore the distances (d) between the rear end of a slat (12) and the upper side of the rear part of the slat (12) mounted downstream, wherein the distance (a₁ to a₁₆) between the regions, which interact with the crankshafts (14), of at least two adjacent slots (16) in the adjustment rod (18) is different from the distances of the axes of rotation (20) of the slats (12), and therefore at least one slat (12) has a different angle than another slat (12), **characterized in that** the adjustment rod (18) is attached so as to be adjustable in the vertical direction by means of a positioning drive (26) actuated manually or by external force, and **in that** the adjustment rod (18) is shaped in such a manner that the positions of the regions, which interact in each case with the crankshafts (14) of the slats (12), of one slot (16) or of some of or all of the slots (16) changes or change in the longitudinal direction of the sieve (166) when the adjustment rod (18) is adjusted in the vertical direction.

2. Sieve (166) according to Claim 1, **characterized in that** the position and distances of the slots (16) on the adjustment rod (18) are selected in such a manner that the slats (12) are steeper in a front region of the sieve (166) and are therefore spaced further apart from one another at their rear ends than in a rear region of the sieve (166).

3. Sieve (166) according to Claim 2, **characterized in that** the position and distances of the slots (16) on the adjustment rod (18) are selected in such a manner that the angles of the slats (12) become successively more shallow over the length of the sieve (166).

4. Sieve (166) according to Claim 3, **characterized in that** the position and distances of the slots (16) on the adjustment rod (18) are selected in such a manner that the angles of the slats (12) become linearly flatter over the length of the sieve (166).

5. Sieve (166) according to Claim 2, **characterized in that** the position and distances of the slots (16) on the adjustment rod (18) are selected in such a manner that the angles of the slats (12) initially increase over the length of the sieve (166) and, after a maximum located at approximately one third of the length of the sieve (166), decrease continuously again.

6. Sieve (166) according to one of Claims 1 to 5, **characterized in that** the adjustment rod (18) is shaped in such a manner that, in a first vertical position of the adjustment rod (18), some or all of the slats (12) each have different angles and, in a second vertical position of the adjustment rod (18), a greater number of slats in comparison to the first position or all of the slats (12) have identical angles.

7. Sieve (166) according to one of Claims 1 to 6, **characterized in that** the adjustment rod (18) is coupled via a rotary bearing (28) to a drive rod (32) which, in turn, is movable in the forward direction by an adjustment drive (30), and **in that** the positioning drive (26) is located at that end of the adjustment rod (18) which is spaced apart from the rotary bearing (28).

8. Combine harvester (100) with a cleaning device (146) and a sieve (166) according to one of the preceding claims.

## Revendications

1. Crible (166) pour une installation de nettoyage (146) d'une moissonneuse-batteuse (100), avec un cadre (10), dans lequel plusieurs lamelles identiques (12) s'étendant transversalement à une direction longitudinale et de vibration du crible (166) sont disposées l'une derrière l'autre dans la direction longitudinale du crible (12), sont montées dans le cadre (10) à des distances respectivement égales de façon rotative autour d'axes de rotation (20) s'étendant transversalement à la direction longitudinale du crible (166) et sont munies de manivelles (14), qui coopèrent respectivement avec des fentes ajustées (16) dans une barre de réglage (18) réglable en position dans la direction longitudinale du crible (166) par rapport au cadre (10), afin de pouvoir régler, par le déplacement de la barre de réglage (18) dans la direction longitudinale du crible (166), les angles des lamelles (12) autour de leurs axes de rotation (20) et dès lors les distances (d) entre l'extrémité arrière d'une lamelle (12) et le côté supérieur de la partie arrière de la lamelle suivante (12), dans lequel la distance (a₁ à a₁₆) entre les régions coopérant avec les manivelles (14) d'au moins deux fentes voisines (16) dans la barre de réglage (18) est différente des distances des axes de rotation (20) des lamelles (12), de telle manière qu'au moins une lamelle (12) présente un autre angle qu'une autre lamelle (12), **caractérisé en ce que** la barre de réglage (18) est installée de façon déplaçable en direction verticale au moyen d'un entraînement de positionnement (26) actionnable manuellement ou par une force extérieure, et **en ce que** la barre de réglage (18) est formée de telle manière que les positions de régions coopérant respectivement avec les manivelles (14) des lamelles (12) d'une fente (16) ou de quelques fentes ou de toutes les fentes (16) dans la direction longitudinale du crible (166) change ou changent, lorsque la barre de réglage (18) est déplacée en direction verticale.

2. Crible (166) selon la revendication 1, **caractérisé en ce que** la position et les distances des fentes (16) sur la barre de réglage (18) sont choisies de telle manière que les lamelles (12) soient plus abruptes dans une région antérieure du crible (166) et soient ainsi plus éloignées l'une de l'autre par leurs extrémités arrière que dans une région arrière du crible (166).

3. Crible (166) selon la revendication 2, **caractérisé en ce que** la position et les distances des fentes (16) sur la barre de réglage (18) sont choisies de telle manière que les angles des lamelles (12) deviennent successivement de plus en plus plats sur la longueur du crible (166).

4. Crible (166) selon la revendication 3, **caractérisé en ce que** la position et les distances des fentes (16) sur la barre de réglage (18) sont choisies de telle manière que les angles des lamelles (12) deviennent linéairement de plus en plus plats sur la longueur du crible (166).

5. Crible (166) selon la revendication 2, **caractérisé en ce que** la position et les distances des fentes (16) sur la barre de réglage (18) sont choisies de telle manière que les angles des lamelles (12) augmentent d'abord sur la longueur du crible (166) et diminuent de nouveau en continu après un maximum situé à environ un tiers de la longueur du crible (166).

6. Crible (166) selon l'une quelconque des revendications 1 à 5, **caractérisé en ce que** la barre de réglage (18) est formée de telle manière que dans une première position verticale de la barre de réglage (18) quelques ou toutes les lamelles (12) présentent respectivement des angles différents et dans une deuxième position verticale de la barre de réglage (18) un plus grand nombre de lamelles que dans la première position ou toutes les lamelles (12) ont des angles égaux.

7. Crible (166) selon l'une quelconque des revendications 1 à 6, **caractérisé en ce que** la barre de réglage (18) est couplée par un palier rotatif (28) à une barre d'entraînement (32), qui est de nouveau mobile dans la direction d'avance au moyen d'un entraînement de réglage (30), et **en ce que** l'entraînement de positionnement (26) se trouve sur l'extrémité de la barre de réglage (18) éloignée du palier rotatif (28).

8. Moissonneuse-batteuse (100) avec un dispositif de nettoyage (146) et un crible (166) selon l'une quelconque des revendications précédentes.
